# EUROPÄISCHE PATENTSCHRIFT

(11) **EP 0 406 781 B1**
(45) Veröffentlichungstag und Bekanntmachung des Hinweises auf die Patenterteilung: **05.05.1993**
(21) Anmeldenummer: 90112627.6
(22) Anmeldetag: 03.07.1990
(51) Int. Cl.: B23Q 3/155

(54) **Magazin für Koordinatenmessgeräte**
Magasin for coordinate measuring machine
Magasin pour machine à mesurer les coordonnées

(30) Priorität: 07.07.1989 DE 3922296
(43) Veröffentlichungstag der Anmeldung: 09.01.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Enderle, Eckhard, D-7080 Aalen-Dewangen (DE); Kaufmann, Dieter, D-7920 Heidenheim 5 (DE)

(56) Entgegenhaltungen:
- US-A- 4 649 623
- PATENT ABSTRACTS OF JAPAN vol. 10, no. 10 (M-446) 16 Januar 1986, & JP-A-60 172432 (DAINICHI KIKOU KK) 5 September 1985,

## Beschreibung

Die Erfindung betrifft ein Magazin für z.B. Koordinatenmeßgeräte oder Werkzeugmaschinen mit mehreren Magazinplätzen für die auszuwechselnden Meßtaster bzw. Werkzeuge.

Ein Magazin für die Meßtaster von Koordinatenmeßgeräten ist beispielsweise in der US-A- 46 49 623 (Figur 5) beschrieben, die als nächstliegender Stand der Technik angesehen wird. In diesem Magazin hängen die auszuwechselnden Meßtaster in der gabelförmigen Ausnehmung eines waagerecht angeordneten Trägers und werden dort von ihrem Eigengewicht gehalten. Solche waagerechten, im Meßbereich des Koordinatenmeßgerätes aufgestellten Magazine werden bevorzugt in Verbindung mit Koordinatenmeßgeräten vom Portal oder Auslegertyp eingesetzt, da der dort senkrecht ausgerichtete Meßarm des Gerätes selbst das einzuwechselnde Meßwerkzeug ohne Zwischenschaltung weiterer mechanischer Teile CNC-gesteuert übernehmen kann.

Es ist außerdem u.a. aus der Produktbeschreibung "Automatischer Tasterwechsel des Leitz-Sirio 688" der Wild Leitz GmbH bekannt, die Meßtaster von Koordinatenmeßgeräten wie bei Werkzeugmaschinen in einem separaten, außerhalb des Meßbereiches angeordneten Magazin vorrätig zu halten und den jeweils einzuwechselnden Meßtaster durch Drehen des Magazins in die Übergabeposition zu bringen, von der aus ein Greifer das Meßwerkzeug aus dem Magazin entnimmt und dem Meßarm des Koordinatenmeßgerätes zuführt. Insbesondere, wenn der Meßarm des betreffenden Gerätes horizontal ausgerichtet ist, wird der Meßtaster zumindest an der Übergabeposition oft ebenfalls in horizontaler Ausrichtung bereitgestellt. In diesem Falle müssen für die Magazinplätze mechanische Halterungen vorgesehen werden, die den Meßtaster sicher in seinem Magazinplatz festhalen und am Herausfallen hindern. Diese mechanische Haltemittel behindern jedoch mehr oder weniger stark das Entnehmen der Meßtaster aus dem Magazin.

Aus der eingangs genannten US-A 46 49 623 ist es außerdem bekannt, die auszuwechselnden Taststiftkombinationen im Tastkopf eines Koordinatenmeßgerätes durch Magnetkräfte, und zwar durch einen kombinierten Permanent/Elektromagneten zu halten. Diese Lösung ist zwar für den einzelnen Tastkopf des Koordinatenmeßgerätes praktikabel, läßt sich jedoch nicht ohnes weiteres zum Festhalten der Meßtaster in einem Magazin übertragen. Denn es bedeutet einen relativ hohen Aufwand, die ca. zwanzig Magazinplätze mit einem solchen kombinierten Permanent/Elektromagneten zu versehen und zu verdrahten.

Es ist die Aufgabe der vorliegenden Erfindung, ein Magazin der eingang genannten Art bei möglichst geringem Aufwand so auszubilden, daß die Meßtaster bzw. Werkzeuge auch bei waagerechter Ausrichtung sicher gehalten und einfach entnommen werden können.

Diese Aufgabe wird gemäß den im Kennzeichen des Anspruches 1 angegebenen Merkmalen dadurch gelöst, daß die Meßtaster bzw. Werkzeuge durch Magnetkräfte in ihren Magazinplätzen gehalten sind, wobei jedem Magazinplatz ein oder mehrere Permanentmagnet(e) zugeordnet sind und ein einzelner Elektromagnet vorgesehen ist, dessen Feld dem Feld des bzw. der Permanentmagnete(n) an dem gerade in den Wechselvorgang eingebundenen Magazinplatz überlagerbar ist.

Infolge der Teilung des Permanent/Elektromagneten in der Art, daß zwar jeder Magazinplatz einen Permanentmagneten enthält, der Elektromagnet jedoch nur der jeweiligen Wechselposition zugeordnet ist, entfällt die Verkabelung des beweglichen Magazinrades. Außerdem wird nur ein einziger Elektromagnet benötigt. Der erforderliche Aufwand ist deshalb minimal.

Da die Meßtaster bzw. Werkzeuge im Magazin von den Magneten allein durch achsial gerichtete Kräfte gehalten sind, mechanische Verriegelungsmechanismen also vermieden sind, können die auszuwechselnden Meßtaster bzw. Werkzeuge an der Übergabeposition sehr leicht entnommen werden, indem einfach der Elektromagnet an der Übergabeposition erregt wird, so daß sein Magnetfeld das des Permanentmagneten in dem betreffenden Magazinplatz neutralisiert.

Der bzw. die Permanentmagnete sind an den jeweiligen Magazinplätzen zweckmäßig mit radialer Ausrichtung ihrer Magnetpole in den Spalt eines weichmagnetischen Führungsteils eingebaut. Diese Maßnahme ermöglicht es, den zur Neutralisierung des Feldes Permanentmagneten benötigten Elektromagneten hinter dem Magazinteller auf der Seite anzuordnen, die dem Meßwerkzeug abgewandt ist und dennoch einen relativ großen magnetischen Fluß vom Elektromagneten auf den Anker des auszuwechselnden Teils zu übertragen.

Der Permanentmagnet kann entweder ein ringförmiger, radial polarisierter Magnet sein. Es ist jedoch auch möglich und wegen der damit erzielbaren höheren Magnetfeldstärken vorteilhaft, jeweils mehrere, achsial polarisierte Einzelmagnete in radialer Verteilung in den Spalt eines Flußführungsteils an den jeweiligen Magazinplätzen einzubauen. Denn achsial polarisierte Magnete werden jedenfalls zur Zeit noch bezogen auf ihr Volumen mit deutlich größeren Magnetfeldstärken angeboten, als radial polarisierte Magnete.

Der Elektromagnet muß nur während der Zeit des Entnahmevorganges, während der er erregt ist, in der Übergabeposition des Magazins positioniert sein. Es ist deshalb möglich, den Elektromagneten zusammen mit dem für die Entnahme der Meßtaster bzw. Werkzeuge verwendeten Greifarm in Richtung auf die Wechselposition bewegbar, beispielsweise auf einem längsgeführten Schlitten anzuordnen. Diese Lösung eignet sich insbesondere für den Fall, daß nicht eine einzige Wechselposition vorgesehen ist, sondern der Greifarm selbst bei feststehendem Magazin die verschiedenen Magazinplätze anfährt. Im anderen Falle kann der Elektromagnet natürlich auch fest an der einzigen Übergabeposition des Magazins installiert werden.

Weitere Vorteile der Erfindung ergeben sich aus der nachfolgenden Beschreibung eines Ausführungsbeispiels anhand der Figuren 1-6 der beigefügten Zeichnungen.
- Figur 1: Ist eine perspektivische Skizze eines mit dem Magazin gemäß der Erfindung versehenen Koordinatenmeßgerätes;
- In Figur 2: ist der Bereich um die Übergabeposition des Magazins (6) aus Figur 1 in vergrößertem Maßstabe dargestellt;
- Figur 3: ist ein Schnitt durch den in der Übergabeposition befindlichen Magazinplatz nach bzw. vor einem Wechselvorgang;
- Figur 4: entspricht dem Schnitt nach Figur 3 in der gleichen Ebene während eines Wechselvorganges;
- Figur 5: zeigt einen Magazinplatz gemäß einem alternativen Ausführungsbeispiel der Erfindung in Aufsicht;
- Figur 6a: zeigt den Magazinplatz eines weiteren Ausführungsbeispiels der Erfindung in Aufsicht;
- Figur 6b: ist ein Schnitt entlang der Linie VIb-VIb in Figur 6a.

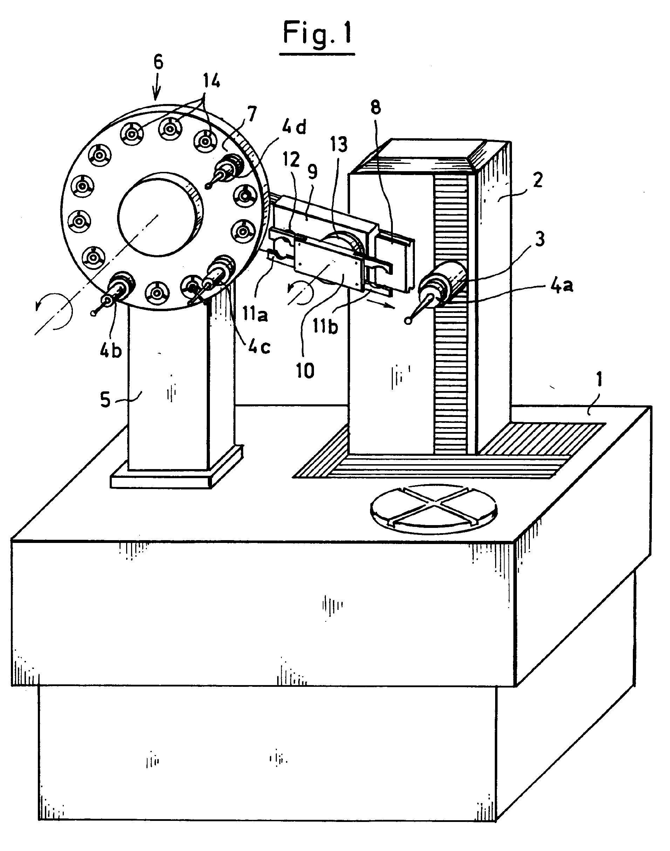

Das in Figur 1 dargestellte Koordinatenmeßgerät besitzt einen mit (1) bezeichneten Maschinentisch, auf dem ein Ständer (2) in den beiden waagerechten Bewegungsrichtungen X und Y verschieblich gelagert ist. Am Ständer (2) ist auf einem senkrecht verschiebbaren Schlitten der Tastkopf (3) des Koordinatenmeßgerätes befestigt. Dieser Tastkopf (3) trägt einen auswechselbaren Taststift (4a).

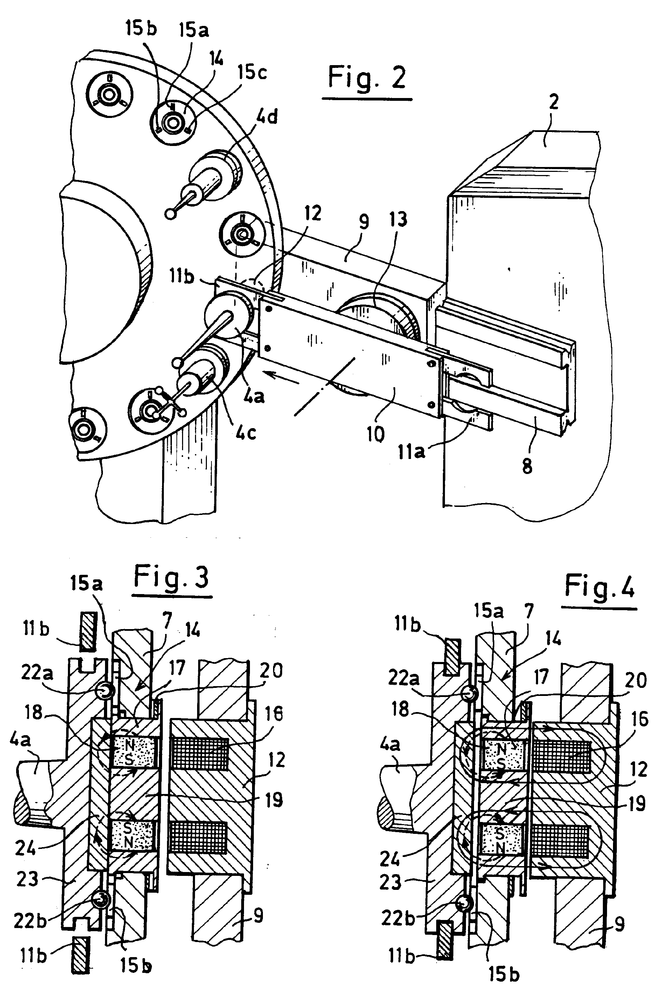

Ebenfalls auf dem Maschinentisch (1) ist außerhalb des Meß- bzw . Arbeitsbereiches des Gerätes ein Magazin (6) für die auszuwechselnden Taststifte aufgestellt. Dieses Magazin besitzt eine an einer vertikalen Säule (5) um eine waagerechte Achse drehbar gelagerte Scheibe (7), an deren Außenumfang die Magazinplätze angeordnet sind. Die Magazinplätze sind insgesamt mit (14) bezeichnet und enthalten wie aus der vergrößerten Darstellung nach Figur 2 hervorgeht jeweils ein Dreipunktlager in Form von drei um 120° versetzten zylindrischen Rollen, gegen die der dort aufbewahrte Taster bzw. Taststift in nachstehend noch näher beschriebener Art und Weise gezogen wird. Derartige Dreipunktlager sind an sich bekannt und unter anderem auch in der eingangs genannten US-A-46 49 623 als reproduzierbares Wechsellager für den Taststift im Tastkopf eines Koordinatenmeßgerätes beschrieben.

In der Darstellung nach Figur 1 ist das Magazin mit drei verschiedenen Meßtastern (4b, 4c, 4d) bestückt. Diese Meßtaster sind ebenso wie der Meßtaster (4a) am Tastkopf (3) des Koordinatenmeßgerätes waagerecht ausgerichtet und können mittels eines Doppelgreifers (10) gegeneinander ausgewechselt werden. Hierzu besitzt der Doppelgreifer (10) zwei Zangen (11a) und (11b), die beispielsweise mittels Druckluft betätigbar sind. Der Doppelgreifer (10) ist über ein Drehlager (13) um mindestens 180° schwenkbar auf einem Schlitten (9) befestigt, der über nicht dargestellte Antriebe entlang der mit (8) bezeichneten Führungsschiene zwischen der Übergabeposition im Meßbereich des Koordinatenmeßgerätes und der Wechselposition am Magazin hin und her pendeln kann. Die Führungsschiene (8) ist ebenso wie die Magazinscheibe (7) an der Säule (5) befestigt.

Weiterhin ist auf dem Schlitten (9) und zwar hinter der Zange (11a bzw. 11b) des Doppelgreifers (10) ein Elektromagnet (12) befestigt. Dieser Elektromagnet (12) befindet sich demgemäß immer dann hinter einem Magazinplatz (14) an der Wechselposition des Magazins (6), wenn eine der beiden Zangen (11a) oder (11b) des Doppelgreifers (10) dort einen Taster entnimmt oder übergibt.

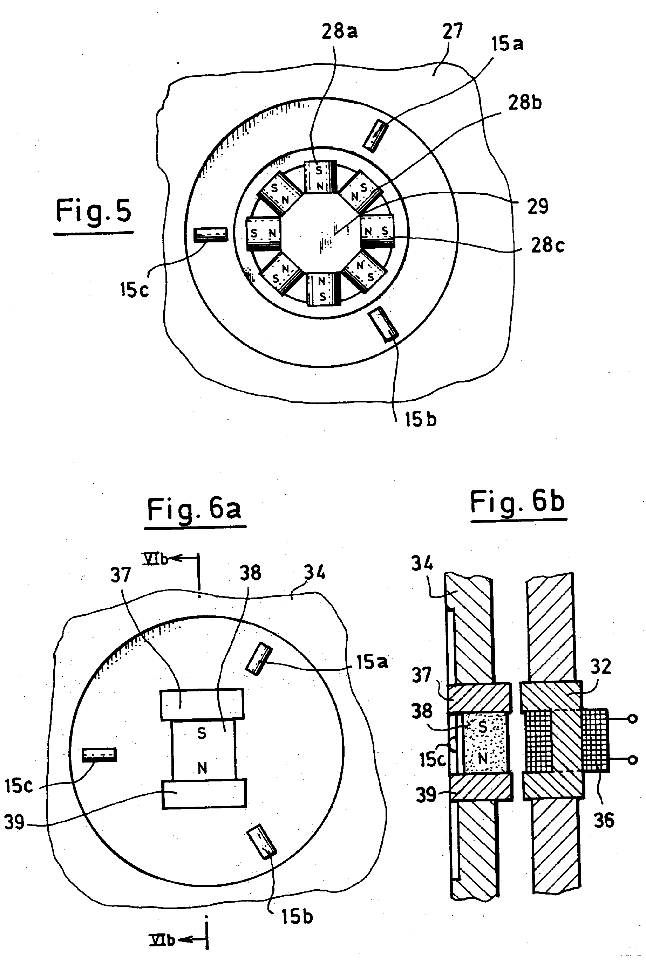

In Figur 3 und 4 ist detaillierter dargestellt, wie die Magazinplätze (14) aufgebaut sind und die Taster (4a-4d) dort gehalten werden:

Hierzu ist jeder Magazinplatz (14) zentrisch zu dem aus den drei Rollen (15a-c) bestehenden Auflager mit einem magnetischen Halter versehen. Dieser Halter besteht aus einem weichmagnetischen Ring (17) und einem dazu zentrischen ebenfalls weichmagnetischen Kern (19) mit kleinerem Außendurchmesser. In dem Spalt zwischen den beiden Teilen (17) und (19) ist ein ringförmiger Permanentmagnet eingesetzt, dessen Feld radial polarisiert ist. Das aus den beiden weichmagnetischen Teilen (17) und (19) bestehende Flußführungsteil und der Permanentmagnet (18) bilden ein Bauteil. Dieses ist gegen die Kraft einer Wellfeder (20) auf der Rückseite des Magazintellers (7) achsial um wenige 1/10 mm verschieblich. Wenn in der in Figur 3 gezeigten Stellung der weichmagnetische Anker (24) im Wechselteller (23) des Tasters (4a) von dem Permanentmagneten (18) angezogen ist, dann zieht diese Wellfeder (20) den Wechselteller (23) mit seinen Lagerkugelpaaren (22) gegen das Dreipunktlager (15a-c), das an jedem Magazinplatz vorhanden ist.

Auf diese Weise sind auch alle anderen Taster im Magazin gehalten.

Zum Auswechseln des Tasters ist es erforderlich, die Kraft des Haltemagnets (18) zu überwinden. Dies ist durch einfaches mechanisches Losreißen nicht möglich, da die für ein sicheres Halten der Taster im Magazin notwendigen Kräfte relativ hoch sind und deshalb zum einen relativ starke Antriebe für den Wechselgreifer (10) erforderlich wären sowie außerdem die Gefahr bestünde, daß das Dreipunktlager im Wechselteller des Tasters (4a) beschädigt wird.

Zum Lösen der magnetischen Haltekraft dient deshalb der in Figur 3 hinter dem Magazinplatz an der Wechselposition mit dem Schlitten (9) eingefahrene Elektromagnet. Dieser besteht aus einem topfartigen, im Querschnitt E-förmigen Weicheisenteil (12), in dessen Ringspalt die Spule (16) des Magneten eingelassen ist. Der Spalt bzw. die Spule besitzt die gleichen radialen Abmessungen wie der Spalt bzw. der Permanentmagnet (18) in den magnetischen Haltern an den einzelnen Magazinplätzen.

In Figur 4 ist die Situation während des Wechselvorganges dargestellt, wenn die Spule (16) des Elektromagneten erregt ist. Hierbei wird von dem Elektromagneten in den Weicheisenteilen (17) und (19) des magnetischen Halters ein magnetischer Fluß induziert, der dem Fluß des Permanentmagneten (18) an der Wechselfläche entgegengesetzt gleich ist. Dadurch verschwindet die auf den Anker (24) im Wechselteller (23) des Tasters (4a) wirkende magnetische Haltekraft, der permanentmagnetische Halter schnappt von der Kraft der Wellfeder (20) gedrückt zurück und die Zange (11b) des Doppelgreifers (10), die den Wechselteller (23) an seinem Außenumfang bzw. in einer darin eingelassenen Ringnut umfaßt hält, kann den Taster (4a) problemlos von seinem Magazinplatz entnehmen.

Der Doppelgreifer (10) übergibt den Taster (4a) dann durch eine kombinierte Translations- und Drehbewegung an den Tastkopf (3) des Koordinatenmeßgerätes. Dort wird er ebenfalls durch Magnetkräfte gespannt. Die entsprechende Einrichtung im Tastkopf ist in der am gleichen Tage von der Anmelderin eingereichten Patentanmeldung mit dem Titel "Elektromagnetische Haltevorrichtung" beschrieben, auf die ausdrücklich Bezug genommen wird.

Im vorstehend beschriebenen Ausführungsbeispiel ist ein ringförmiger Permanentmagnet (18) mit radialer Polarisierung seines Magnetfeldes verwendet. Genausogut ist es aber auch möglich, den in Figur 5 dargestellten magnetischen Halter in die einzelnen Magazinplätze einzubauen. Dieser Halter besitzt einen im Querschnitt mehreckigen, im dargestellten Falle achteckigen weichmagnetischen Kern, und der weichmagnetische Ring (27) besitzt innen eine ebensolche mehreckige Form. In den dadurch entstehenden Spalt sind nun acht einzelne Permanentmagnete (28a-h) eingesetzt. Diese Permanentmagnete sind zwar achsial polarisiert, durch die radiale Anordnung in dem Spalt läßt sich jedoch ein gleichmäßiger und kräftiger magnetischer Fluß über das daran angesetzte Ankerteil in dem zu haltenden Wechselteller erzeugen.

Ein weiteres, von der Kreissymmetrie abweichendes Ausführungsbeispiel ist in Figur 6a bzw. 6b dargestellt. Hier wird der magnetische Halter im Magazinplatz (34) von einem plattenförmigen Permanentmagneten (38) gebildet, der zwischen den im Querschnitt rechteckigen Schenkeln (37) und (39) eines weichmagnetischen Joches angeordnet ist. Die Schenkel (37) und (39) bilden mit dem Eisenkern (32) des Elektromagneten (36) an der Wechselposition des Magazins ein U-förmiges Flußführungsteil, von dem der Anker im Wechselteller des einzuwechselnden Tasters angezogen wird.

## Patentansprüche

1. Magazin für z.B. Koordinatenmeßgeräte oder Werkzeugmaschinen mit mehreren Magazinplätzen (14) für die auswechselbaren Meßtaster (4a-d) bzw. Werkzeuge, dadurch gekennzeichnet, daß die Meßtaster (4a-d) bzw. Werkzeuge durch Magnetkräfte in ihren Magazinplätzen (14) gehalten sind, wobei jedem Magazinplatz (14) ein oder mehrere Permanentmagnet(e) (18; 28a-h; 38) zugeordnet sind und ein einzelner Elektromagnet (12/16; 32/36) vorgesehen ist, dessen Feld dem Feld des bzw. der Permanentmagnete(n) (18;28a-h;38) an dem gerade in den Wechselvorgang eingebundenen Magazinplatz (14) überlagerbar ist.

2. Magazin nach Anspruch 1, dadurch gekennzeichnet, daß der bzw. die Permanentmagnet(e) (18; 28a-h; 38) mit radialer Ausrichtung der Magnetpole in dem Spalt eines weichmagnetischen Flußführungsteils (17/19) an dem jeweiligen Magazinplatz eingebaut sind.

3. Magazin nach Anspruch 2, dadurch gekennzeichnet, daß ein radial polarisierter, ringförmiger Permanentmagnet (18) in den jeweiligen Spalt eingesetzt ist.

4. Magazin nach Anspruch 2, dadurch gekennzeichnet, daß jeweils mehrere, achsial polarisierte Einzelmagnete (28a-h) radial angeordnet in den Spalt des Flußführungsteils (27/29) eingebaut sind.

5. Magazin nach Anspruch 2, dadurch gekennzeichnet, daß ein plattenförmiger Einzelmagnet (38) zwischen zwei Schenkel (37/39) eines U-förmigen Flußführungsteils (32, 37, 39) eingebaut ist.

6. Magazin nach Anspruch 1, dadurch gekennzeichnet, daß der bzw. die Permanentmagnet(e) (18) mit ihrem Flußführungsteil (17/19) gegen Federkraft (20) verschiebbar in den Magazinplätzen (14) gelagert sind.

7. Magazin nach Anspruch 1, dadurch gekennzeichnet, daß jedem Magazinplatz (14) ein Dreipunktlager (15a-c) zugeordnet ist und die Meßtaster (4a-d) bzw. Werkzeuge durch achsial gerichtete Kräfte an das jeweilige Dreipunktlager (15a-c) angelegt sind.

8. Magazin nach Anspruch 1, dadurch gekennzeichnet, daß der Elektromagnet (12/16) fest an der Wechselposition des Magazins installiert ist.

9. Magazin nach Anspruch 1, dadurch gekennzeichnet, daß das Magazin mit einem Greifarm (10) versehen ist und der Elektromagnet (12/16) zusammen mit dem Greifarm (10) zur Wechselposition am Magazin hin bewegbar ist.

## Claims

1. A magazine for a coordinate measuring apparatus or machine tools for example, having a plurality of magazine locations (14) for interchangeable measuring probes (4a - d) or tools, characterized by the fact, that the measuring probes (4a - d) or tools are held in their magazine locations (14) by magnetic forces with one or a plurality of permanent magnets (18; 28a-h; 38) being provided for each magazine location and by providing a single electromagnet (12/16; 32/36) having a field which can be superposed upon the field of the permanent magnet (18; 28a-h; 38) at the magazine location (14) just involved in the transfer or exchange operation.

2. The magazine of claim 1, characterized in that said permanent magnet or magnets (18; 28a-h; 38) are mounted with radially alignet magnetic poles in the gap of a soft magnetic flux-conducting part (17/19) at the respective magazine location involved.

3. The magazine of claim 2, characterized in that a radially polarized ring-shaped permanent magnet (18) is seated in said gap.

4. The magazine of claim 2, characterized in that a plurality of single axially polarized magnets (18a-h) are disposed in the gap of said flux conducting part (27/29) in a radial arrangement.

5. The magazine of claim 2, characterized in that a plate-shaped single magnet (18) is disposed between two legs (37/39) of a U-shaped flux-conducting part (32, 37, 39).

6. The magazine of claim 1, characterized in that the permanent magnet or magnets and the flux conducting parts (17/19) are mounted in said magazine locations (14) as to be displaceable against spring (20) force.

7. The magazine of claim 1, characterized in that each of said magazine locations (14) further includes a three-point bearing (15a-c) and each of said measuring probes (14a-d) are held against said three-point bearing (15a - c) by axially directed forces.

8. The magazine of claim 1, characterized in that said electromagnet (12/16) is fixedly mounted at the exchange position of the magazine.

9. The magazine of claim 1, characterized in that the magazine further comprises a gripper (10) said gripper (10) with said electromagnet (12/16) being displaceable to the exchange position of the magazine.

## Revendications

1. Magasin destiné par exemple à des appareils à mesurer les coordonnées ou les machines-outils, comprenant plusieurs emplacements de magasinage (14) pour les palpeurs de mesure (4a-d) ou les outils interchangeables, caractérisé en ce que les palpeurs de mesure (4a-d) ou les outils sont maintenus à leurs emplacements de magasinage (14) par des forces magnétiques, avec coordination d'un ou de plusieurs aimants permanents (18; 28a-h; 38) à chaque emplacement de magasinage (14) et avec prévision d'un seul électroaimant (12/16; 32/36) dont le champ peut être superposé au champ du ou des aimants permanents (18; 28a-h; 38) à l'emplacement de magasinage (14) impliqué à ce moment dans l'opération de changement.

2. Magasin selon la revendication 1, caractérisé en ce que l'aimant permanent ou les aimants permanents (18; 28a-h; 38) est ou sont incorporé(s), avec orientation radiale des pôles magnétiques, dans l'entrefer d'un organe de guidage du flux (17/19) en matériau magnétiquement doux aux différents emplacements de magasinage.

3. Magasin selon la revendication 2, caractérisé en ce qu'un aimant permanent (18) de forme annulaire et à polarisation radiale est placé dans l'entrefer.

4. Magasin selon la revendication 2, caractérisé en ce que plusieurs aimants permanents séparés (28a-h) à polarisation axiale sont incorporés sous une orientation radiale dans l'entrefer de l'organe de guidage du flux (27/29).

5. Magasin selon la revendication 2, caractérisé en ce qu'un seul aimant permanent séparé (38) en forme de plaque est incorporé entre deux branches (37/39) d'un organe de guidage du flux (32, 37, 39) de forme en U.

6. Magasin selon la revendication 1, caractérisé en ce que l'aimant permanent ou les aimants permanents (18) est ou sont monté(s) aux emplacements de magasinage (14) de manière à pouvoir être déplacé(s) ensemble avec l'organe de guidage du flux (17/19) coordonné à l'encontre d'une force élastique (20).

7. Magasin selon la revendication 1, caractérisé en ce qu'un palier à trois points d'appui (15a-c) est coordonné à chaque emplacement de magasinage (14) et les palpeurs de mesure (4a-d) ou les outils sont appliqués par des forces orientées axialement contre le palier à trois points d'appui (15a-c) concerné.

8. Magasin selon la revendication 1, caractérisé en ce que l'électroaimant (12/16) est installé fixe à la position de changement du magasin.

9. Magasin selon la revendication 1, caractérisé en ce qu'il est pourvu d'un bras préhenseur (10) et l'électroaimant (12/16) est déplaçable sur le magasin, ensemble avec le bras préhenseur (10), en direction de la position de changement.
